# EUROPÄISCHE PATENTANMELDUNG

(11) **EP 0 976 684 A1**
(43) Veröffentlichungstag der Anmeldung: **02.02.2000**
(21) Anmeldenummer: 99114181.3
(22) Anmeldetag: 22.07.1999
(51) Int. Cl.: C02F 9/00, C02F 1/64, C02F 1/28, G09B 23/00

(54) **Pilotanlage für die Wasseraufbereitung**

(30) Priorität: 31.07.1998 DE 19834727
(71) Anmelder: Gesellschaft für Biotechnologische Forschung mbH (GBF), D-38124 Braunschweig (DE); WFM Wasserforschung Mainz GmbH, 55118 Mainz (DE)
(72) Erfinder: Bilitewski, Ursula, Dr., 38124 Braunschweig (DE); Obst, Ursula, Dr., 55118 Mainz (DE)
(74) Vertreter: Boeters, Hans Dietrich, Dr.

(57) **Zusammenfassung**

Eine Pilotanlage für die Wasseraufbereitung mit verschiedenen hintereinandergeschalteten Aufbereitungseinheiten sowie daran vorgesehenen Meß-, Probenentnahme-, Eindosierungs- und/oder Abzugsstellen (16, 34, 48, 50) kennzeichnet sich dadurch, daß sie in miniaturisierter Form für einen Wasserdurchsatz zwischen lediglich etwa 1 und 10 ml/min aus Modulen (2, 4, 6, 8, 10) aufgebaut ist. Die Module können bedarfsweise mit entsprechenden Wasserproben labormäßig getestet werden, ebenso wie auch die gesamte Anlage mittels am Ort des Wasservorkommens entnommener Wasserproben im Labor betrieben werden kann. Zweckmäßigerweise ist die Anlage indessen mobil gestaltet.

## Beschreibung

Die Erfindung betrifft eine Pilotanlage für die Wasseraufbereitung gemäß Gattungsbegriff des Patentanspruchs 1.

Wässer, die ohne Aufbereitung als Trinkwasser Verwendung finden können, treten nur noch äußerst selten auf. Zumeist ist aufgrund geogener und/oder anthropogener Belastungen eine Aufbereitung erforderlich, mit der störende Substanzen ganz oder zumindest überwiegend aus dem Wasser entfernt werden. Die Aufbereitungsverfahren richten sich zu einem wesentlichen Teil nach der Natur der zu entfernenden Problemstoffe bzw. -stoffgruppen. Dabei finden üblicherweise folgende Aufbereitungsstufen Anwendung:
Belüftung
Flockung
Filtration
Enteisenung
Entmanganung
Aktivkohlefiltration
biologische Aufbereitung und
Desinfektion.

Aufgrund der heute vorhandenen Kenntnisse auf dem Gebiet der Wasseraufbereitung lassen sich bei der Erschließung neuer Wasservorkommen für die Trinkwasserversorgung bereits erste Angaben über die Dimensionierung und den Betrieb der einzelnen Prozeßstufen machen. Letzen Endes sind jedoch Untersuchungen in Pilotanlagen unentbehrlich. Solche Pilotanlagen sind derzeit aufwendige, kostenintensive ingenieurtechnische Anlagen, die Wasserdurchsätze in der Größenordnung von m³/h oder zumindest l/h erfordern. Damit besitzen diese Anlagen eine beschränkte Flexibilität und lassen nur noch eine begrenzte Optimierung der einzelnen Prozeßstufen zu. Außerdem müssen sie dort installiert werden, wo sich das aufzubereitende Wasser befindet, häufig also in einer Umgebung ohne ausreichende analytische Ausstattung. Im Interesse einer optimal angepaßten Aufbereitungsanlage wären jedoch Voruntersuchungen wünschenswert, mit denen sich sicherstellen ließe, daß beispielsweise nur die tatsächlich notwendigen Aufbereitungsstufen und diese in optimierter Ausführungs- und Betriebsform installiert werden.

Andererseits gibt es im Bereich der automatisierten analytischen Verfahren, wie zum Beispiel der Fließinjektionsanalyse, umfangreiche Kenntnisse über die automatisierte Dosierung von Proben und Reagenzien, das Vermischen von Flüssigkeitsströmen, die Abtrennung fester oder hochmolekularer Bestandteile einer Probe oder die Durchführung chemischer und biochemischer Reaktionen in Festbettreaktoren. Diese Systeme werden mit einem Flüssigkeitsbedarf von ml/min betrieben und sind gewöhnlich modular aufgebaut. Außerdem weisen sie unmittelbar darin integrierte Meßfühler auf, so daß die Probe on-line beim Durchströmen des Systems analysiert werden kann. Beispiele derartiger Meßfühler sind Photometer, pH- oder sonstige ionensensitive Elektroden, Sauerstoffelektroden, Leitfähigkeitselektroden und Enzymelektroden zur Bestimmung von Glucose, Alkohol und dergl. Die in solchen Systemen verwendeten Komponenten, wie zum Beispiel Mischstücke, Pumpen, Ventile, Reaktionsstrecken, Reaktionssäulen und Membrankammern, sind auf die analytische Anwendung hin optimiert. Das heißt aber, daß ihre Auslegung und die Verweilzeit des Analyten in der jeweiligen Stufe nicht für eine vollständige Umsetzung oder Abtrennung des Analyten ausgelegt sind.

Von diesem Stand der Technik ausgehend liegt der Erfindung die Aufgabe zugrunde, eine Pilotanlage für die Wasseraufbereitung derart auszubilden, daß sie aufbau-, aufwands- und mobilitätsmäßig einem Fließinjektionsanalysesystem vergleichbar ist dabei aber, im gewünschten Maße, eine vollständige Umsetzung der betreffenden Wasserprobe ermöglicht.

Diese Aufgabe ist erfindungsgemäß durch eine Pilotanlage mit den Merkmalen des Patentanspruchs 1 gelöst. Die Unteransprüche geben dazu vorteilhafte Ausgestaltungsmöglichkeiten an.

Durch den modularen Aufbau ist es möglich, auf äußerst flexible Weise eine gesamte Wasseraufbereitungsanlage nachzubilden. Dazu erlaubt es die Miniaturisierung, die Anlage mobil zu gestalten, um sie komplett zum Ort des jeweiligen Wasservorkommens transportieren wie aber auch labormäßig mit angelieferten Wasserproben betreiben zu können. Ebenso können aber auch einzelne Prozeßstufen für sich zunächst labormäßig getestet werden, bevor sie in die betreffende Pilotanlage eingebaut werden.

Nachfolgend wird ein Ausführungsbeispiel einer erfindungsgemäßen Pilotanlage anhand der begleitenden Zeichnungen genauer beschrieben. Von diesen zeigt
- Fig. 1: ein Schema der gesamten betreffenden Pilotanlage,
- Fig. 2: einen schematischen Längsschnitt durch ein darin auftretendes Belüftungs- und Ausflockungsmodul,
- Fig. 3: einen schematischen Längsschnitt durch ein in der Pilotanlage nach Fig. 1 auftretendes Enteisenungs- oder Entmanganungsmodul und
- Fig.4: einen schematischen Längsschnitt durch ein in der Pilotanlage nach Fig. 1 auftretendes Aktivkohle-Filtrationsmodul.

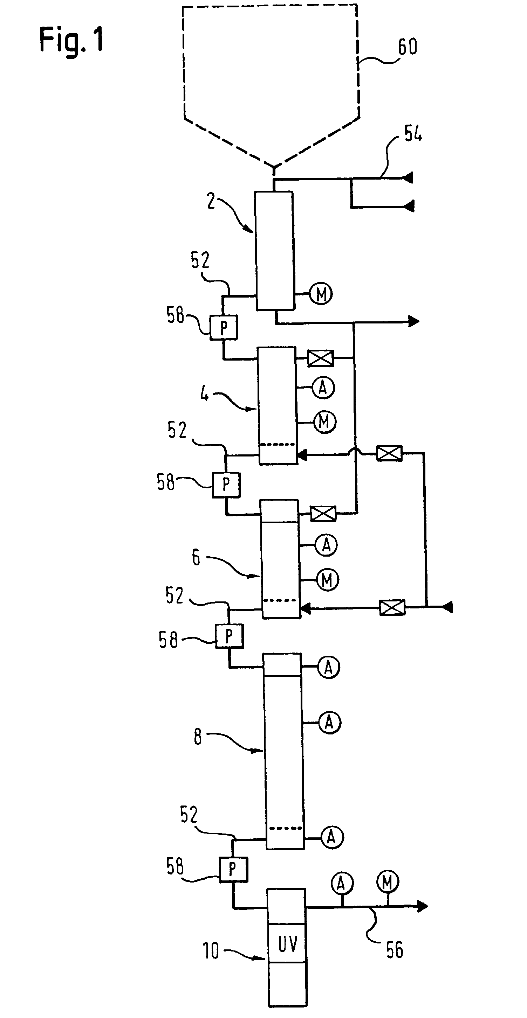

Die in Fig. 1 gesamtheitlich gezeigte Pilotanlage weist, in Wasserdurchflußrichtung aufeinanderfolgend, in diesem Beispiel nach Art einer Reaktionssäule, ein Belüftungs- und Ausflockungsmodul 2, ein Enteisenungsmodul 4, ein Entmanganungsmodul 6, ein Aktivkohle-Filtrationsmodul 8 und ein Desinfektionsmodul 10 auf. All diese Module, mit Ausnahme allenfalls des Desinfektionsmoduls 10, sind als zylinderförmige Behälter von beispielsweise rund 40 mm Durchmesser und 100 mm Länge entsprechend einem Volumen von etwa 100 - 150 ml ausgebildet.

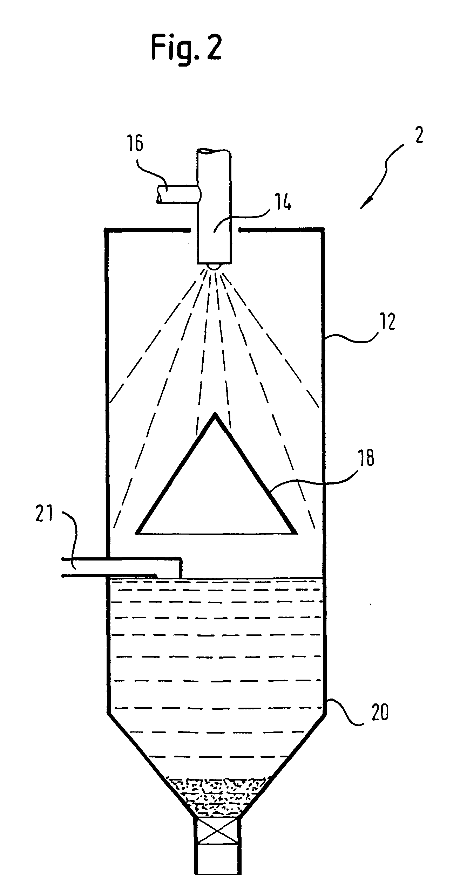

Der Aufbau des Belüftungs- und Ausflockungsmoduls 2 geht genauer aus Fig. 2 hervor. Hiernach tritt das aufzubereitende Wasser in den aufrechtstehenden Behälter 12 zentral von oben her durch eine - vorzugsweise positionseinstellbare - Sprühdüse 14 ein, wobei ihm durch einen seitlichen Anschluß 16 bedarfsweise noch ein Fällungsmittel zudosiert werden kann. Das Wasser wird von der Sprühdüse 14 auf die Innenwand des Behälters 12 wie auch eine zentral darin vorgesehene konische Prallplatte 18 gesprüht und sammelt sich im unteren Abschnitt 20 des Behälters 12, von wo aus es seitlich über einen Anschluß 21 abgezogen werden oder abfließen kann, während sich abgeschiedener Schlamm, wie vor allem Eisenhydroxidschlamm, am unteren Ende des Behälters 12 sammelt, von wo er von Zeit zu Zeit nach unten abgezogen werden kann.

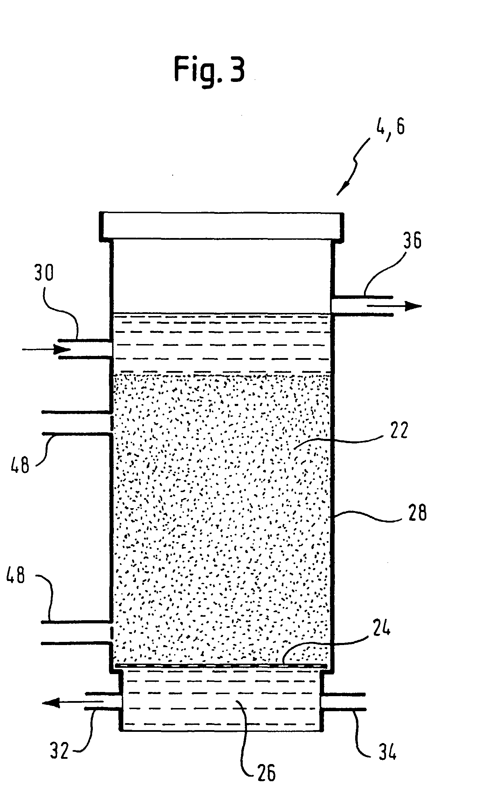

Die beiden nachfolgenden Module 4 und 6 - vergl. Fig. 3 - sind einfache Festbett-Filtermodule, bei denen das i.a. primär aus Kies bestehende Filterbett 22 auf einer Siebplatte 24 aufruht, die unter sich einen Sammelraum 26 bestehen läßt. Das ankommende Wasser tritt in den betreffenden Behälter 28 oberhalb des Filterbetts 22 durch einen seitlichen Zulauf 30 ein und nach unten durch das Filterbett hindurch in den Sammelraum 26 über, von wo es über einen Stutzen 32 seitlich abgezogen wird. Durch einen gegenüberliegend angeordneten Stutzen 34 kann dem Behälter 28 von Zeit zu Zeit Spülluft zugeführt werden, die nach Durchströmen des Filterbetts 22 nach oben aus dem Behälter ins Freie entweichen kann. Andererseits kann Spülwasser oder ein Spülwasser-Luft-Gemisch den Behälter durch einen dem Zulauf 30 gegenüber- jedoch etwas höherliegenden Stutzen 36 verlassen.

In dem Filterbett 22 findet neben einer physikalischen Filterung eine biologische Umsetzung statt unter Mitwirkung von sich an dem Filterbett anlagernden Bakterien, durch die das in dem Wasser enthaltene Eisen bzw. Mangan oxidiert wird. Um die etwas schwerer als diejenige von Eisen vonstatten gehende Oxidation von Mangan zu unterstützen, kann dem Wasser vor dem Eintritt in das Entmanganungsmodul 6 oder auch dort noch bedarfsweise Luft zugesetzt werden.

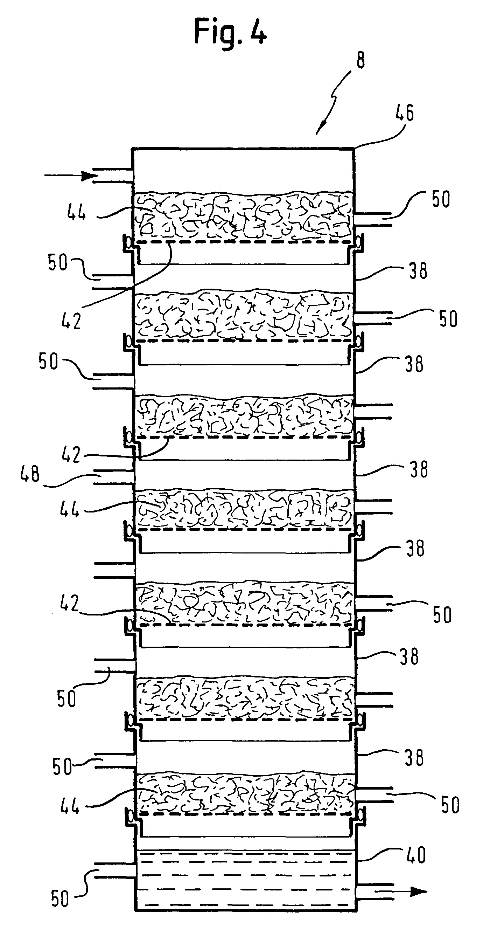

Auch das in Fig. 4 gezeigte Aktivkohle-Filtrationsmodul 8 ist ein Festbett-Filtermodul, der allerdings aus aufeinandergesetzten Teilmodulen, wie zum Beispiel 38, aufgebaut ist. Jedes dieser Teilmodule mit Ausnahme des untersten, 40, das eine Sammelwanne bildet, weist eine Siebplatte 42 auf, die ein Aktivkohle-Filterbett 44 trägt. Die Zahl der Teilmodule 38 ist nach Belieben variierbar. Das Wasser tritt in das oberste Teilmodul, 46, seitlich ein, um sodann aufeinanderfolgend die Filterbetten 44 des Teilmoduls 46 und sämtlicher Teilmodule 38 zu durchströmen, bevor es sich in dem Teilmodul 40 sammelt. Zur Erneuerung des jeweiligen Filterbetts sind zumindest die Teilmodule 38 leicht entnehmbar.

Sämtliche so weit beschriebenen Module, d.h. das Belüftungsmodul 2, das Enteisenungsmodul 4, das Entmanganungsmodul 6 und das Aktivkohle-Filtrationsmodul 8, weisen - vorzugsweise verschließbare - seitliche Anschlüsse, wie zum Beispiel 48 in Fig. 3 oder 50 in Fig. 4, für die dauerhafte Anbringung von Meßfühlern, beipielsweise pH- und pO₂-Sonden, oder aber auch für die Probenentnahme zwecks außerhalb der Pilotanlage durchzuführender Analysen auf. Daneben können solche Anschlüsse auch in den Verbindungs- sowie Zu- und Ableitungen, wie z. B. 52, 54 und 56 in Fig. 1, vorgesehen sein.

Das Desinfektionsmodul 10 besteht im einfachsten Fall aus einem einfachen Durchflußrohr, in dem das hindurchtretende Wasser mit UV-Licht bestrahlt wird.

Die Förderung des Wassers durch die Pilotanlage erfolgt gemäß Fig. 1 mittels zwischen den einzelnen Modulen 2 - 10 angeordneter Pumpen 58, die als Dosierpumpen ausgebildet sein können. Es kann aber auch der Pilotanlage ein Hochbehälter vorgeschaltet sein, wie er in Fig. 1 gestrichelt angedeutet und mit 60 bezeichnet ist und aus dem das Wasser durch die Anlage aufgrund von Gravitationskräften hindurchtritt. In diesem Fall können an die Stelle der in Fig. 1 eingezeichneten Pumpen 58 bedarfsweise Drosselventile, mechanische Filter oder dergl., treten. Die Pumpen 58 können, ebenso wie die letztgenannten Drosselventile, mit Drucksensoren, Durchflußzählern oder dergl. ausgestattet sein.

## Patentansprüche

1. Pilotanlage für die Wasseraufbereitung mit verschiedenen hintereinandergeschalteten Aufbereitungseinheiten sowie daran vorgesehenen Meß-, Probenentnahme-, Eindosierungs- und/oder Abzugsstellen (16, 34, 48, 50), **dadurch gekennzeichnet**, daß sie in miniaturisierter Form für einen Wasserdurchsatz zwischen lediglich etwa 1 und 10 ml/min im wesentlichen aus Modulen (2, 4, 6, 8, 10) aufgebaut ist.

2. Pilotanlage nach Anspruch 1, **dadurch gekennzeichnet**, daß die Module Belüftungs-, Enteisenungs-, Entmanganungs-, Aktivkohlefiltrations- und/oder Desinfektionsmodule (2, 4, 6, 8, 10) umfassen.

3. Pilotanlage nach Anspruch 1 oder 2, **dadurch gekennzeichnet**, daß zumindest die meisten der Module (2, 4, 6, 8, 10) eine im wesentlichen zylindrische oder prismatische Form besitzen.

4. Pilotanlage nach Anspruch 3, **dadurch gekennzeichnet**, daß die betreffenden Module (2, 4, 6, 8, 10) nach Art einer Reaktionssäule aufrechtstehend im wesentlichen koaxial aufeinanderfolgen.

5. Pilotanlage nach einem der vorhergehenden Ansprüche, **dadurch gekennzeichnet**, daß ein Belüftungs- und Ausflockungsmodul (2) mindestens eine - vorzugsweise positionseinstellbare - Sprühdüse (14) für das eintretende Wasser aufweist.

6. Pilotanlage nach Anspruch 5, **dadurch gekennzeichnet**, daß das Belüftungs- und Ausflockungsmodul (2) eine von zumindest einem Teil des versprühten Wassers beaufschlagte - vorzugsweise konische - Prallplatte (18) enthält.

7. Pilotanlage nach einem der vorhergehenden Ansprüche, **dadurch gekennzeichnet**, daß mindestens eines der Module (4, 6, 8), wie zum Beispiel ein Enteisenungs- oder ein Entmanganungsmodul (4, 6), ein Festbett-Filterbett (22; 44) enthält.

8. Pilotanlage nach einem der Ansprüche 2 bis 6, **dadurch gekennzeichnet**, daß mindestens eines der Module, wie zum Beispiel ein Aktivkohlefiltrationsmodul (8), aus aufeinandergesetzten Teilmodulen (38, 40, 46) besteht.

9. Pilotanlage nach einem der vorhergehenden Ansprüche, **dadurch gekennzeichnet**, daß sie einen eingangsseitigen Hochbehälter (60) für eine aufzubereitende Wasserprobe aufweist.

10. Pilotanlage nach einem der vorhergehenden Ansprüche, **dadurch gekennzeichnet**, daß zwischen zumindest einzelnen der Module (2, 4, 6, 8, 10) eine Pumpe (58), ein Drosselventil und/oder ein mechanischer Filter angeordnet ist.

11. Pilotanlage nach einem der vorhergehenden Ansprüche, **dadurch gekennzeichnet**, daß sie als Ganzes ortsbeweglich ist.
